# EUROPEAN PATENT APPLICATION

(11) **EP 4 840 757 A2**
(43) Date of publication of application: **18.11.2026**
(21) Application number: 26201382.4
(22) Date of filing: 28.02.2024
(51) Int. Cl.: B64C 1/18

(54) **FLOOR ASSEMBLY AND AIRCRAFT WITH MONOLITHIC FLOOR ELEMENT**

(62) Document number(s) of the earlier application(s) in accordance with Art. 76 EPC: 24160396.8 / 4 610 163
(71) Applicant: Airbus Operations GmbH, 21129 Hamburg (DE)
(72) Inventor: Gross, Claus-Peter, 21129 Hamburg (DE)
(74) Representative: Schornack, Oliver

(57) **Abstract**

The present disclosure relates to a floor assembly (100) for an aircraft (1), which includes a monolithic floor element (110) including an integral cross strut (120). The monolithic floor element has an upper surface (111), which comprises a seat rail surface portion (117) configured to mount a seat rail (150) thereon. The floor assembly (100) further comprises at least one support structure arranged underneath the monolithic floor element (110) and configured to support the monolithic floor element at least in an area of the seat rail surface portion (117).

## Description

The present disclosure generally relates to a floor assembly having a monolithic floor element and an aircraft having such floor assembly. Particularly, the present disclosure relates to a floor assembly with a monolithic floor element and a support structure arranged underneath the floor element at least in an area designated for a seat rail, and an aircraft having at least one such floor assembly.

A conventional cabin floor of an aircraft comprises longitudinal beams and floor panels attached thereon. The longitudinal beams usually span between two sides of a frame of the aircraft fuselage, wherein the floor panels span between two adjacent longitudinal beams.

Such floor structure is usually made from a metal, for example, aluminium, or a composite plastic material. Some floor structures, such as in DE 10 2017 220 378 A1, include a monolithic, self-supporting floor element comprising at least two longitudinal members, a floor plate arranged on the longitudinal members and a respective connecting element arranged at each end of the longitudinal members. Such floor structure can be produced integrally from a fibre reinforced plastic.

Thus, a conventional cabin floor may consist of a plurality of components, which increases installation time and overall weight of the cabin floor, or may be formed as a monolithic element including beams, which may become bulky when handling during installation.

Moreover, in both cases the seat rails for mounting passenger seats, monuments and the like are mounted in dedicated recesses. This may require replacement of a floor panel or entire monolithic floor element, if corrosion or other damages occur with or at the seat rail.

It is therefore an object of the present disclosure to provide an improved cabin floor structure.

This object is solved by the present invention as defined in the independent claims. Preferred embodiments are defined by the dependent claims.

According to a first aspect to better understand the present disclosure, a floor assembly for an aircraft comprises a monolithic floor element including an integral cross strut, wherein the monolithic floor element has an upper surface, which comprises a seat rail surface portion configured to mount a seat rail thereon. The monolithic floor element may substantially be a sheet-like floor element including an integral cross strut. The cross strut extends from an area of the floor element adjacent to or forming an edge or a corner of the floor element towards an adjacent side or corner of the floor element. The cross strut usually extends in a diagonal direction from a side edge of the floor element and forms an angle with the longitudinal direction and the transverse direction of the floor element.

Furthermore, the cross strut can be configured to be mounted to a primary structure component of the aircraft, such as a frame, stringer, clip or the like, in order to transfer loads from the floor element in a longitudinal direction and/or a circumferential direction of the aircraft fuselage.

As a mere example, the monolithic floor element can be produced by punching a metal sheet. The punching (or press forming) may include forming the cross strut in a single process step. Therefore, the floor element cannot only be produced in an easy and fast manner, but can also be lightweight and easy to handle.

It is to be understood that the floor element can likewise be made from a plastic material, such as a (reinforced) composite plastic material. Manufacturing the composite plastic material can also include moulding the cross strut integral to the floor element. In case of a thermoplastic material, press forming can likewise be applied for producing the monolithic floor element including the cross strut.

Moreover, the floor assembly further comprises at least one support structure arranged underneath the monolithic floor element and configured to support the monolithic floor element at least in an area of the seat rail surface portion. The at least one support structure can be coupled to an underside of the monolithic floor element. For example, the at least one support structure can be connected or fastened to the floor element. Thus, keeping the at least one support structure as a separate element reduces the overall weight of the individual components of the floor assembly, which facilitates handling and installation thereof.

It is to be understood that the at least one support structure can already be coupled to the floor element outside of the aircraft fuselage, if this facilitates final assembly of the aircraft.

In an implementation variant, the seat rail surface portion of the monolithic floor element can form an upper surface of the floor element, particularly the seat rail surface portion can be flush with other surface portions of the floor element. For instance, the seat rail surface portion can form a portion of the highest surface of the floor element (except for the cross strut) when installed in the aircraft. In other words, the floor element can be a plane sheet, without any recesses for seat rails. This significantly simplifies the floor element and also its production. Moreover, since the seat rail can be mounted on a plane surface of the floor element, there is a significantly reduced risk of any fluid (such as water or beverages) collecting at the seat rail leading to corrosion. In addition, a seat rail can simply be mounted on the floor element at any desired position (for example, depending on the type of aircraft or aircraft operator requirements). Since the monolithic floor element is supported by the at least one support structure at least underneath the portion forming the seat rail surface, the sufficient strength can be provided to the floor element for receiving the loads of passenger seats mounted to the seat rail.

In an implementation variant, the monolithic floor element can further include a first integral side beam and a second integral side beam. In other words, a side beam can be made from the same material as the (sheet-like) floor element, and can be formed in an integral (one piece) manner as the floor (surface) element.

The first and second side beam can be arranged along the longitudinal sides of the floor element, i.e. along a transverse direction of an aircraft, when the floor assembly is mounted into the aircraft.

As a mere example, the first side beam and/or a second side beam can be formed at the same process step when forming the sheet-like floor element, such as during a punching or press forming step. Likewise, the first and/or second side beam can be formed together with the sheet-like floor element during moulding of the integral (one piece) floor element. Thus, strength in a longitudinal direction of the floor element is provided, while the floor assembly is still easy to install and lightweight.

In an implementation variant, the second integral side beam can have a flange. For instance, the flange can be arranged to bear a first integral side beam of another monolithic floor element thereon. In other words, a distance between an upper side of the flange and an upper side of the floor element substantially corresponds (can be equal to) a height of the first side beam of the other monolithic floor element. Thus, a plurality of floor elements can be installed in the aircraft, wherein a first side beam of one monolithic floor element is supported by flange at a second side beam of an adjacent floor element.

In an implementation variant, the at least one support structure can comprise a transverse beam coupled to an underside of the monolithic floor element. As a mere example, the at least one support structure can extend between the first and second side beam, and can run parallel to a seat rail (later) mounted on top of the floor element, i.e., can run parallel and underneath the seat rail surface portion.

In an implementation variant, the transverse beam can have a U-shaped or omega-shaped cross-section. Such cross-sectional profile for the at least one support structure allows providing a lightweight support structure as well as an easy to manufacture support structure, since such cross-sectional profiles fall under standard profile manufacturing. It is to be understood that the cross-sectional profile can also be an L-shape, T-shaped or I-shape or the like.

In an implementation variant, the cross-section of the transverse beam underneath the seat rail surface portion can be wider than a cross-section of a transverse beam at a different region of the monolithic floor element not forming a seat rail surface portion. Thus, additional strength can be provided to the floor element in the areas, where the seat rail(s) is/are installed, i.e. in the seat rail surface portion of the floor element. Likewise, the support structure underneath the seat rail surface portion can be made from a thicker material than a support structure provided underneath a different region of the monolithic floor element not forming a seat rail surface portion.

In an implementation variant, the at least one support structure can be dome-shaped. For example, a top portion of the dome-shaped support structure can be coupled to an underside of the monolithic floor element. Such dome-shaped structure can be easily produced, for example, in a punching or press forming step (e.g., in case of a metal material or a thermoplastic material) or a single moulding step. A dome-shaped support structure allows a very good transfer of loads from the floor element towards the bottom side of the dome-shaped support structure.

In an implementation variant, the at least one support structure can comprise a plurality of dome-shaped support structures. Thus, a larger area of the floor element can be supported by the plurality of support structures. For instance, a plurality of dome-shaped support structures can be arranged underneath the seat rail surface portion of the floor element. For example, a plurality of dome-shaped support structures can be aligned underneath the seat rail surface portion, and preferably the top portion of the support structures are underneath the seat rail surface portion.

It is to be understood that some of the plurality of dome-shaped support structures can also be arranged underneath the floor element in areas not forming a seat rail surface portion, such as a portion of the floor element between an edge of the floor element and a seat rail surface portion and/or between two seat rail surface portions in case of a plurality of seat rails provided on the floor element.

In an implementation variant, the plurality of dome-shaped support structures can be monolithically formed. This allows easy manufacturing and installation of the support structure.

The support structures can be coupled to an underside of the floor element, for example, can be connected or attached to the floor element. This includes adhering, welding, screwing, riveting or using similar fasteners.

Furthermore, bottom portions of several of the dome-shaped support structures can form a channel underneath the monolithic floor element. In other words, the top portions and bottom portions of the several dome-shaped support structures are arranged along a line, so that all bottom portions are forming a longitudinal channel covered by the floor element. Such channel allows installation of service lines, such as air supply ducts, electrical harnesses, water lines, waste water lines or the like.

Due to the dome-shaped structures, a plurality of dome-shaped support structures arranged, for example, in a grid form channels running in two directions. This facilitates installing any service lines in a longitudinal direction as well as transverse direction of the aircraft fuselage.

In an implementation variant, one or more of the bottom portions of the several of the dome-shaped support structures can comprise a hatch into the channel. Such hatch allows entering a channel between the monolithic floor element and the several dome-shaped support structures. Optionally, a lid can be provided to close such hatch.

In an implementation variant, one or more of the bottom portions of the several of the dome-shaped support structures can be configured to receive or allow mounting a lining or other component associated with a cargo compartment underneath the floor assembly. For example, a lining, light, sensor, detector, fire extinguisher or other cargo area component can be mounted to the bottom portion of the dome-shaped support structures. It is to be understood that other portions of the support structures can be used to connect, attach or fix a cargo area component thereto.

In an implementation variant, the top portion of one or more of the dome-shaped support structures can comprise an opening. Such opening allows access to the underside of the floor element. As a mere example, a seat rail (or seat rail crown) can be mounted to an upper surface of the floor element using screws or rivets applied from an underside of the floor element, which can be reached through the opening.

In an implementation variant, the size of the dome-shaped support structures substantially corresponds (is equal) to one dimension of the floor element. For instance, a width of the dome-shaped support structure can be substantially equal to a width of the floor element. Furthermore, the dome-shaped support structures can have a square footprint or a rectangular footprint. Thus, a plurality of dome-shaped support structures can be arranged along a longitudinal direction of the floor element. It is to be understood that a grid of one or more dome-shaped support structures in each direction can be arranged underneath one floor element. Thus, a single dome-shaped support structure, a certain number of dome-shaped support structures all arranged along one line (e.g., longitudinal direction of the floor element), or a certain number of dome-shaped support structures group-wise arranged along a respective line (e.g., longitudinal direction of the floor element, such as an NxM grid) can be arranged underneath one floor element.

The provision of dome-shaped support structures allows omitting any beam at the floor element, which can then be substantially plane or flat. This creates channels between the floor element and a bottom portion of the support structures, which can run underneath all floor elements. It is to be understood that beams at one or both longitudinal ends of the floor element can still be provided.

In an implementation variant, the monolithic floor element can comprise one or more depressions. Thus, the rigidity of the otherwise sheet-like floor element can be increased, so that the floor assembly becomes more robust against forces and impacts. As a mere example, the one or more depressions can have a round shape (forming a portion of a sphere), an elliptical shape, a rectangular shape, can extend in a certain direction (such as the longitudinal direction or transverse direction of the floor element), or can have a meandering shape.

In an implementation variant, a filler can be disposed in the one or more depressions. Such filler can be arranged to have a surface flush with the remaining upper surface of the floor element. This facilitates attachment of any component on the upper side of the floor element, such as a carpet, a monument or the like.

According to a second aspect to better understand the present disclosure, an aircraft comprises a plurality of floor assemblies of the first aspect or one or more of its variants.

In an implementation variant, the aircraft can further comprise a plurality of frames, and a plurality of floor beams protruding from a respective one of the plurality of the frames. Such floor beams can extend horizontally from a respective frame and define a level of the floor to be built in the aircraft, such as a passenger cabin floor also delimiting a cargo area underneath the floor.

Furthermore, the monolithic floor element of each of the plurality of floor assemblies can be supported by two or more of the plurality of floor beams. In other words, the plurality of floor assemblies is placed on a plurality of floor beams. This may be achieved by placing the monolithic floor element onto the floor beams. It is to be understood that placing at least a portion of the at least one support structure of the plurality of floor assemblies onto a floor beam is likewise possible. In any case, any forces and loads from the floor assembly are transferred via the floor beams into the frames, i.e. into the primary structure of the aircraft fuselage.

In an implementation variant, the aircraft can further comprise at least one fastener fastening one of the plurality of floor beams to a first integral side beam of a first one of the plurality of floor assemblies and a second integral side beam of a second one of the plurality of floor assemblies to one another. In other words, the first integral side beam of the first floor assembly is arranged adjacent to the second integral side beam of the second floor assembly (e.g., rests on its flange), wherein the first or second integral side beam is arranged adjacent to one of the floor beams, so that they can be mounted to one another by the at least one fastener.

It is further to be understood that the floor beam can likewise be provided between the respective side beams of the first and second floor assemblies. In other words, the floor beam is sandwiched between the first integral side beam of the first floor assembly and the second integral side beam of the second floor assembly.

In an implementation variant, the integral cross strut of each of the plurality of floor assemblies can be connected to one of the plurality of frames. This can be achieved by providing one or more clips to the frames, to which the cross strut can be mounted. Alternatively or additionally, the integral cross strut can be mounted directly to the frame or to a stringer which is fastened/connected to one or more frames.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an aircraft section including a floor assembly;
- Figure 2: schematically illustrates a perspective view of an exemplary floor assembly;
- Figure 3: schematically illustrates a perspective view of an exemplary floor element;
- Figure 4: schematically illustrates a perspective view cut along line A-A of Figure 3 and showing the floor element from underneath;
- Figure 5: schematically illustrates a cross-sectional view of two adjacent exemplary floor elements mounted to a floor beam;
- Figure 6: schematically illustrates a perspective view of exemplary floor assemblies cut along a transverse line;
- Figure 7: schematically illustrates a perspective view of another exemplary floor assembly;
- Figure 8: schematically illustrates a perspective view of the floor assembly of Figure 7 from underneath;
- Figure 9: schematically illustrates details of a support structure of the floor assembly of Figure 7; and
- Figure 10: schematically illustrates a side view of the floor assembly of Figure 7.

In the following description, for purposes of explanation and not limitation, specific details are set forth in order to provide a thorough understanding of the present disclosure. It will be apparent to one skilled in the art that the present disclosure may be practiced in other implementations that depart from these specific details.

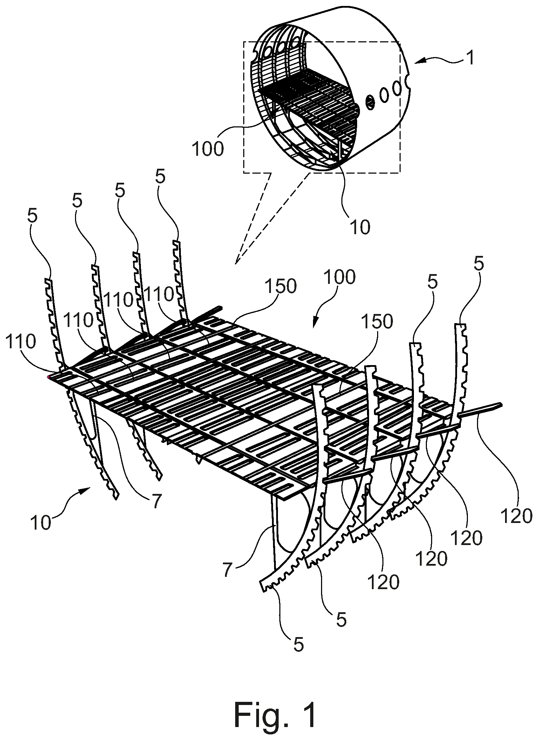

Figure 1 schematically illustrates an aircraft section 10 including a floor assembly 100 in general as well as enlarged in more detail, where the outer skin of the aircraft 1 has been removed. The illustrated aircraft section 10 shows exemplary four frames 5 that are each arranged in a cross-sectional plane of the aircraft 1. For better visibility of the components of the floor assembly 100 illustrated in Figure 1, the upper portions and the bottom portions of the frames 5 are cut away.

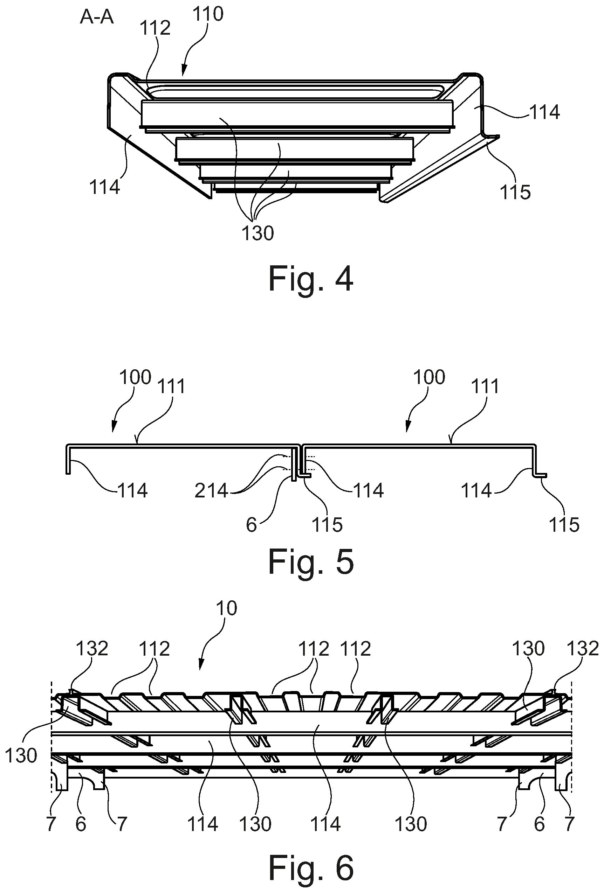

At the frame 5 can be a Z-strut 7 which is connected to the frame 5 or is integrally formed with the frame 5. The Z-strut 7 supports a floor beam 6 (better visible, for example, in Figure 6), which together with the frame 5 form a triangular region in a cargo area of the aircraft fuselage.

On top of the floor beams 6 is a plurality of floor assemblies 100. Each floor assembly 100 comprises a monolithic floor element 110 including an integral cross strut 120, the latter of which is connected to or attached to a frame 5. The cross strut 120 is integral with one of the monolithic floor elements 110, so that any forces and loads from the floor element 110 can be transferred into the floor beams 6 as well as via the cross strut 120 into the frame 5. A cross strut 120 can be arranged on either side of the floor element 110, as well as one respective cross strut 120 can be arranged on each side of the floor element 110.

The floor elements 110 have a substantially planar or flat upper surface, which forms the plane for a passenger cabin. On top of the upper surface is arranged a plurality of seat rails 150. As a mere example, Figure 1 illustrates four seat rails 150, i.e., two pairs of the seat rails 150 arranged on each side of the aircraft 1, such as in a single aisle aircraft.

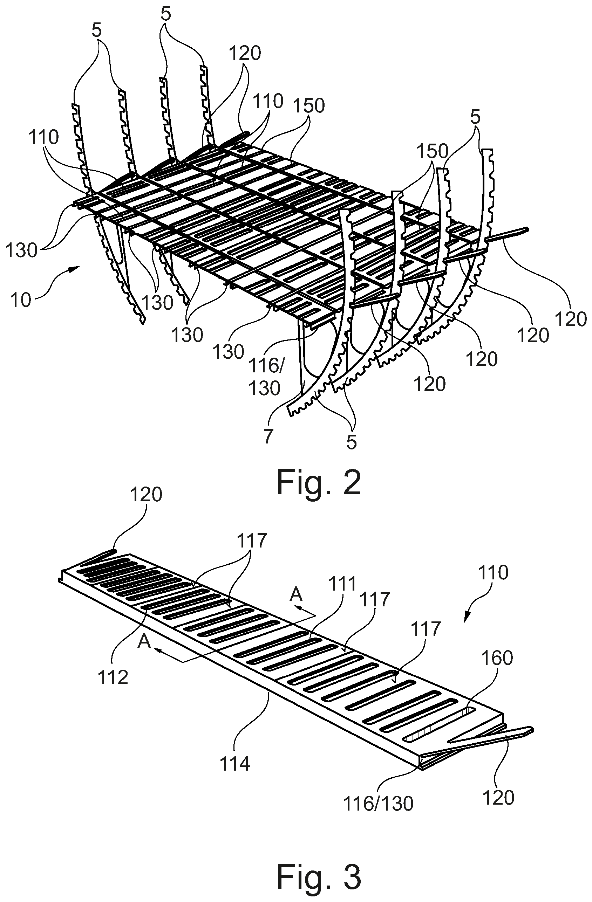

Figure 2 schematically illustrates a perspective view of a plurality of exemplary floor assemblies 100. Elements and components already described in the general aircraft section 10 of Figure 1 are provided with the same reference numerals, and their description will be omitted for sake of brevity.

The exemplary floor assemblies 100 include at least one support structure 130 arranged underneath the monolithic floor element 110 and configured to support the monolithic floor element at least in an area of a seat rail surface portion 117. Such seat rail surface portion 117 is configured to mount a seat rail 150 thereon. As a mere example, the seat rail surface portion 117 can be an upper surface area of the monolithic floor element 110, where no obstacles are arranged, such as protrusions or dents or the like, which would hinder mounting a seat rail 150 to the floor element 110.

Figure 3 schematically illustrates a perspective view of an exemplary floor element 110 alone. The floor element 110 is provided with several seat rail surface portions 117 (at least four are illustrated in Figure 3). The seat rail surface portions 117 can be portions of an upper surface 111 of the floor element 110.

Furthermore, the monolithic floor element 110 comprises one or more depressions 112. The one or more depressions 112 are a dent or can be a recess in the upper surface 111 of the floor element 110. In case of a depression 112, the entire sheet-like floor element 110 can be pressed downwards (over its entire thickness). The illustrated depressions 112 extent in a certain direction, here in a widthwise direction of the floor element 110 (longitudinal direction of the aircraft 1 where the floor assembly 100 is installed). It is to be understood that the depressions 112 can have any other shape including meandering depressions, rectangular depressions, round depressions, etc.. Each depression 112 stiffens the otherwise sheet-like floor element 110 due to its creation of a portion of the floor element 110 deviating from the plane defined by the upper surface 111.

Moreover, one or more of the depressions 112 can be filled with a filler 160 disposed in the one or more depressions 112 (only one filled depression 112 is depicted in Figure 3). This allows achieving a flush upper surface of the floor element 110, although depressions 112 are provided for increased stiffness and rigidity of the floor element 110. In addition, the filler(s) 160 can be made from a material, such as plastic, rubber or other elastic material, which reduces propagation of vibrations or otherwise damps swinging of the floor element 110.

Figure 3 further illustrates a first integral side beam 114 running along a longitudinal side of the monolithic floor element 110. The first integral side beam 114 can be made from the same material as the floor element 110, e.g., it can be integral (one piece) to the remainder of the monolithic floor element 110. The first integral side beam 114 can further be formed in a single manufacturing step, such as press forming or punching a sheet of material.

Furthermore, a longitudinal end beam 116 can be provided at a longitudinal end or edge of the floor element 110. Such longitudinal end beam 116 can also be formed from the same material as (can be integral to) the monolithic floor element 110, for example, during the same manufacturing steps as the floor element 110.

Alternatively, at the longitudinal end of the floor element 110 can be a support structure 130 arranged underneath the monolithic floor element 110.

Figure 4 schematically illustrates a perspective view cut along line A-A of Figure 3 and shows the floor element 110 from underneath. The monolithic floor element 110 can include a second integral side beam 114 (to the right in Figure 4, while the first integral side beam 114 is illustrated to the left in Figure 4). The second integral side beam 114 can have a flange 115 arranged at a bottom end of the second integral side beam 114. This further increases rigidity and stiffness of the floor element 110.

Figure 4 further illustrates the support structures 130 arranged underneath the monolithic floor element 110. As can be derived from Figures 3 and 4, some of the support structures 130 can be arranged to support the monolithic floor element 110 in an area of the seat rail surface portion(s) 117, while others of the support structures 130 are arranged in other areas of the floor element 110 (not forming a seat rail surface portion 117; where no seat rail 150 is mounted). Thus, with an increasing number of support structures 130, the resilience and/or stiffness of the floor element 110 can be increased.

As a mere example, the support structures 130 can run between the first and second integral side beams 114, 115. This allows attaching or connecting the support structures 130 to the side beams 114, 115, which further increases stiffness and rigidity of the floor element 110.

Figure 5 schematically illustrates a cross-sectional view of two adjacent exemplary floor elements 110 mounted to a floor beam 6. By way of at least one fastener 214, the floor beam 6 can be fastened to the first integral side beam 114 of a first floor assembly 100 and a second integral side beam 114 of the second floor assembly 100. Thus, installation of the floor assemblies 100 in the aircraft can be achieved in an easy manner.

As a mere example and with further reference to Figure 3, the floor beam 6 can be guided through a gap between one of the side beams 114 and a longitudinal end beam 116 (or a support structure 130 at the longitudinal end), such gap being visible in Figure 3. Thus, the floor element 110 can be hinged or hooked to the floor beam 6.

The flange 115 of the second side beam 114 can be arranged to bear a first integral side beam 114 of another monolithic floor element 110 thereon. In other words, the flange 115 forms a support for an adjacent floor element 110. Thus, once a first floor element 110 is installed in the aircraft 1, the next floor element can simply be laid on the flange 115 of the already installed floor element 110, while at an opposite end the floor element 110 is hinged or hooked onto the next floor beam 6. This allows a stable installation even before fixation via fasteners 214 is achieved.

Figure 6 schematically illustrates a perspective view of an aircraft section 10 having the exemplary floor assemblies 100 of Figure 2 and that is cut along a transverse line of the aircraft 1. The same components as in Figure 2 are provided with the same reference numerals and their description is omitted for sake of brevity.

Figure 6 illustrates in more detail the arrangement of the floor beams 6 and shows portions of associated Z-struts 7 and frames 5, which together form a support for the floor assemblies 100.

Moreover, the at least one support structure 130 in these exemplary floor assemblies 100 is formed by a transverse beam (see also Figure 4). This transverse beam 130 runs in the transverse direction of the floor element 110 (and longitudinal direction of the aircraft 1).

At the seat rail surface portions 117 (the reference numerals have been omitted in Figure 6 for better visibility) respective seat rail crowns 132 can be formed, which allow mounting and fixation of a seat rail 150. Underneath the seat rail surface portions 117 respective transverse beams 130 can be formed supporting the seat rail surface portion 117. Mounting the transverse beams 130 to the floor element 110 can include mounting the seat rail crowns 132, for example, using a single fastener (screw, rivet or the like; not illustrated) running through the floor element 110.

In areas of the floor element 110 without seat rail surface portion 117 the transverse beams 130 can be smaller than the transverse beams 130 underneath the seat rail surface portions 117. As a mere example, the cross-section of the transverse beam 130 underneath the seat rail surface portion 117 is wider than a cross-section of a transverse beam 130 at a different region of the monolithic floor element 110 not forming a seat rail surface portion 170. Additionally or alternatively, a thicker material can be used to form the profile of the transverse beams 130 underneath the seat rail surface portions 117.

Figure 6 (as well as Figure 4) schematically illustrates the transverse beams 130 as having an omega-shaped cross-section. This is only one example for a cross-section of a transverse beam 130. The cross-section of the transverse beam 130 can likewise have a C-shape, a U-shape, a T-shape or an I-shape or the like.

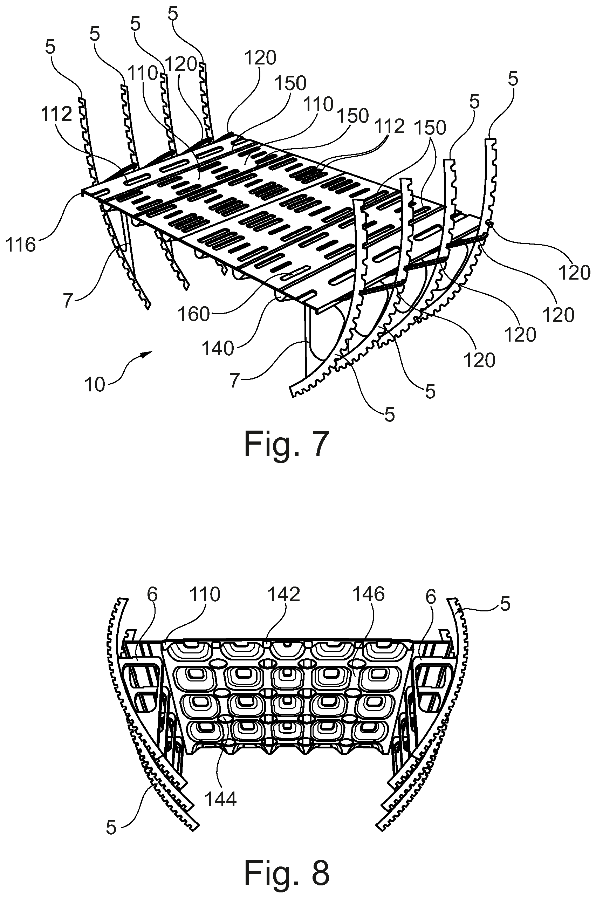

Figure 7 schematically illustrates a perspective view of another exemplary floor assembly 100. Elements and components already described in the general aircraft section 10 of Figure 1 as well as in Figure 2 are provided with the same reference numerals, and their description will be omitted for sake of brevity.

The monolithic floor element 110 having an integral cross strut 120 and seat rail surface portions 117 is the same as in the example of Figure 2. Likewise, depressions or dents 112 are provided, which can optionally be filled with a filler 160 (only one being illustrated in Figure 7). As is illustrated in Figure 7, the size of the depressions 112 can vary, depending on the rigidity or stiffness to be achieved in the respective portion of the floor element 110. Such depressions 112 of different size can likewise be applied to the example of Figure 2.

The main difference to the example of Figure 2 is the form of the at least one support structure 140, which will be explained in more detail with respect to Figures 8 to 10.

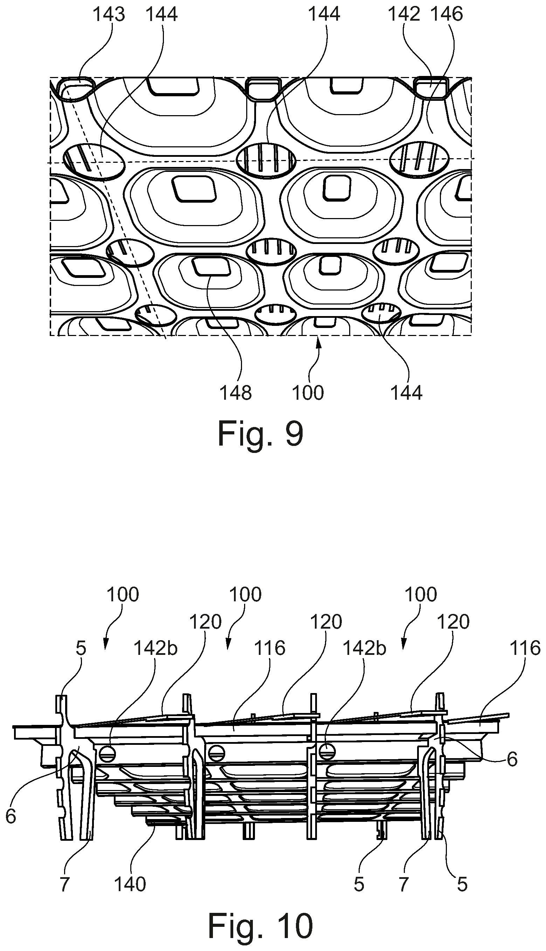

Figure 8 schematically illustrates a perspective view of the floor assembly 100 of Figure 7 from underneath, Figure 9 schematically illustrates details of a support structure 140 of the floor assembly 100 of Figure 7, and Figure 10 schematically illustrates a side view of the floor assembly 100 of Figure 7.

The support structure 140 in this particular example is dome-shaped, and a top portion of the dome-shaped support structure 140 is coupled to an underside of the monolithic floor element 110. As a mere example, the top portion can be connected to the underside of the monolithic floor element 110, for example, by welding, riveting, screwing, adhering or the like. The top portion of the dome-shaped support structure 140 supports the monolithic floor element 110 and transfers loads into the dome-shaped support structure 140. This increases stiffness and rigidity of the floor element 110.

In Figure 8 a grid of dome-shaped support structures 140 is arranged underneath the plurality of floor elements 110. In the illustrated example, a width of the support structures 140 substantially corresponds to a width of one of the floor elements 110, so that a grid of one line of support structures 140 (particularly five support structures 140 along a line) are arranged underneath one floor element 110. It is to be understood that any number of support structures 140 can be arranged underneath one floor element 110. This includes grids of NxM support structures 140 under one floor element 110, where N is the number of support structures 140 in one line (e.g., along the transverse direction of the aircraft 1), with N = {1 ..N}, and M is the number of support structures 140 in one column (e.g., along the longitudinal direction of the aircraft 1), with M = {1 .. M}.

The plurality of support structures 140 can be monolithically formed, i.e. are a one-piece support structure 140. This can be applied to all support structures 140 for one or more floor elements 110, as long as the support structures 140 can be handled by working staff and are not too bulky to be handled inside the aircraft 1.

The bottom portions 146 of several of the dome-shaped support structures form a channel 142 underneath the floor element 110, which is particularly visible in Figures 9 and 10. Due to the grid of support structures 140, the channels 142 run along a longitudinal direction and a transverse direction of the aircraft 1. When omitting any side beam, such as side beams 114 in the example of Figure 2 (particularly visible in Figure 4 and 5), the channels 142 can run uninterrupted along the entire cabin floor (all floor assemblies 100). This facilitates installation of harnesses for air, electricity, water, wastewater and the like in the floor assembly 100, and frees the space underneath the floor assembly 100, for example, for storage of cargo and the like.

The support structures 140 can further be equipped with harness holders 143 (Figure 9), such as on top of a bottom portion 146 and inside of the channel 142. This facilitates tying harnesses, lines and ducts in the channels.

A hatch 144 into the channel 142 can be provided in several of the dome-shaped support structures 140. This allows access into the channel 142 as well as to the underside of the floor element 110. Likewise, an opening 148 in a top portion of one or more of the dome-shaped support structures 140 can be provided to allow access to the underside of the floor element 110. As a mere example, a seat rail 150 or seat rail crown 132 can be mounted to the seat rail surface portion 117 of the floor element 110 through such opening 148. Furthermore, openings 142b at a side of the support structures 140, particularly visible in Figure 10, also allow access into the channels 142 from the triangular region of the aircraft fuselage.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

The present disclosure also provides for the following examples:
1. A floor assembly (100) for an aircraft (1), comprising:
   a monolithic floor element (110) including an integral cross strut (120), the monolithic floor element having an upper surface (111), which comprises a seat rail surface portion (117) configured to mount a seat rail (150) thereon; and
   at least one support structure (130, 140) arranged underneath the monolithic floor element (110) and configured to support the monolithic floor element at least in an area of the seat rail surface portion (117).
2. The floor assembly (100) of example 1, wherein the monolithic floor element (110) further includes a first integral side beam (114) and a second integral side beam (114) having a flange (115), wherein the flange (115) is arranged to bear a first integral side beam (114) of another monolithic floor element (110) thereon.
3. The floor assembly (100) of example 1 or 2, wherein the at least one support structure comprises a transverse beam (130) coupled to an underside of the monolithic floor element (110).
4. The floor assembly (100) of example 3, wherein the transverse beam (130) has a U-shaped or omega-shaped cross-section, and
   wherein the cross-section of the transverse beam (130) underneath the seat rail surface portion (117) is wider than a cross-section of a transverse beam (130) at a different region of the monolithic floor element (110) not forming a seat rail surface portion (117).
5. The floor assembly (100) of example 1 or 2, wherein the at least one support structure (140) is dome-shaped, and wherein a top portion of the dome-shaped support structure is coupled to an underside of the monolithic floor element (110).
6. The floor assembly (100) of example 5, wherein the at least one support structure (140) comprises a plurality of dome-shaped support structures, preferably, monolithically formed, and wherein bottom portions (146) of several of the dome-shaped support structures form a channel (142) underneath the monolithic floor element (110).
7. The floor assembly (100) of example 6, wherein one or more of the bottom portions of the several of the dome-shaped support structures comprise a hatch (144) into the channel (142), and/or
   wherein the top portion of one or more of the dome-shaped support structures (140) comprises an opening (148).
8. The floor assembly (100) of one of examples 1 to 7, wherein the monolithic floor element (110) comprises one or more depressions (112),
   wherein, preferably, a filler (160) is disposed in the one or more depressions (112).
9. An aircraft (1), comprising:
   a plurality of floor assemblies (100) of one of examples 1 to 8.
10. The aircraft (1) of example 9, further comprising:
   a plurality of frames (5); and
   a plurality of floor beams (6) protruding from a respective one of the plurality of the frames (5),
   wherein the monolithic floor element (110) of each of the plurality of floor assemblies (100) is supported by two or more of the plurality of floor beams (6).
11. The aircraft (1) of example 10, when dependent on example 2, further comprising:
   at least one fastener (214) fastening one of the plurality of floor beams (6) to a first integral side beam (114) of a first one of the plurality of floor assemblies
   (100) and a second integral side beam (114) of a second one of the plurality of floor assemblies (100) to one another.
12. The aircraft (1) of example 10 or 11, wherein the integral cross strut (120) of each of the plurality of floor assemblies (100) is connected to one of the plurality of frames (5).

## Claims

1. A floor assembly (100) for an aircraft (1), comprising:
a monolithic floor element (110) including an integral cross strut (120), the monolithic floor element having an upper surface (111), which comprises a seat rail surface portion (117) configured to mount a seat rail (150) thereon; and
at least one support structure (130, 140) arranged underneath the monolithic floor element (110) and configured to support the monolithic floor element at least in an area of the seat rail surface portion (117),
**characterised in that**
the at least one support structure (140) is dome-shaped, and
a top portion of the dome-shaped support structure is coupled to an underside of the monolithic floor element (110).

2. The floor assembly (100) of claim 1, wherein the monolithic floor element (110) further includes a first integral side beam (114) and a second integral side beam (114) having a flange (115), wherein the flange (115) is arranged to bear a first integral side beam (114) of another monolithic floor element (110) thereon.

3. The floor assembly (100) of claim 1 or 2, wherein the at least one support structure comprises a transverse beam (130) coupled to an underside of the monolithic floor element (110).

4. The floor assembly (100) of claim 3, wherein the transverse beam (130) has a U-shaped or omega-shaped cross-section, and
wherein the cross-section of the transverse beam (130) underneath a seat rail surface portion (117) is wider than a cross-section of a transverse beam (130) at a different region of the monolithic floor element (110) not forming the seat rail surface portion (117).

5. The floor assembly (100) of claim 1, wherein the at least one support structure (140) comprises a plurality of dome-shaped support structures, preferably, monolithically formed, and wherein bottom portions (146) of several of the dome-shaped support structures form a channel (142) underneath the monolithic floor element (110).

6. The floor assembly (100) of claim 5, wherein one or more of the bottom portions of the several of the dome-shaped support structures comprise a hatch (144) into the channel (142).

7. The floor assembly (100) of claim 5 or 6, wherein the top portion of one or more of the dome-shaped support structures (140) comprises an opening (148).

8. The floor assembly (100) of one of claims 1 to 7, wherein the monolithic floor element (110) comprises one or more depressions (112),
wherein, preferably, a filler (160) is disposed in the one or more depressions (112).

9. An aircraft (1), comprising:
a plurality of floor assemblies (100) of one of claims 1 to 8.

10. The aircraft (1) of claim 9, further comprising:
a plurality of frames (5); and
a plurality of floor beams (6) protruding from a respective one of the plurality of the frames (5),
wherein the monolithic floor element (110) of each of the plurality of floor assemblies (100) is supported by two or more of the plurality of floor beams (6).

11. The aircraft (1) of claim 10, when dependent on claim 2, further comprising:
at least one fastener (214) fastening one of the plurality of floor beams (6) to a first integral side beam (114) of a first one of the plurality of floor assemblies (100) and a second integral side beam (114) of a second one of the plurality of floor assemblies (100) to one another.

12. The aircraft (1) of claim 10 or 11, wherein the integral cross strut (120) of each of the plurality of floor assemblies (100) is connected to one of the plurality of frames (5).
